# EUROPÄISCHE PATENTANMELDUNG

(11) **EP 1 343 341 A1**
(43) Veröffentlichungstag der Anmeldung: **10.09.2003**
(21) Anmeldenummer: 02005072.0
(22) Anmeldetag: 06.03.2002
(51) Int. Cl.: H04Q 7/38

(54) **Aufbau einer Notrufverbindung in einem zellularen Funkkommunikationssystem**

(71) Anmelder: SIEMENS AKTIENGESELLSCHAFT, 80333 München (DE)
(72) Erfinder: Gessner, Christina, 81373 München (DE); Traynard, Jean-Michel, 81667 München (DE)

(57) **Zusammenfassung**

Die Erfindung betrifft ein Verfahren zum Initiieren und gegebenenfalls Absetzen eines Notrufs und ein zugehöriges zellulares Funkkommunikationssystem mit mindestens einer Teilnehmerstation und mindestens einer Basisstation, welche über einen Funknetzzugangsknoten an mindestens eine Funknetzsteuereinrichtung eines Funkkommunikationsnetzes angebunden ist. Erfindungsgemäß wird ein Notruf mit Hilfe von Signalisierungsinformation von der Teilnehmerstation initiiert, welche mit der Information übertragen wird, die zum Verbindungsaufbau einer kanalvermittelten Verbindung zwischen der Teilnehmerstation und der Basisstation dient. Dies geschieht unabhängig davon, ob eine kanalvermittelten, eine paketvermittelte oder keine aktive Verbindung zwischen der Teilnehmerstation und der Basisstation besteht.

## Beschreibung

Die Erfindung betrifft ein Verfahren zum Aufbau einer Notrufverbindung in einem zellularen Funkkommunikationssystem nach dem Oberbegriff des Anspruchs 1.

Die Erfindung betrifft ferner einen Funkkommunikationssystem nach dem Oberbegriff des Anspruchs 10.

In Funkkommunikationssystemen werden Informationen (beispielsweise Sprache, Bildinformation oder andere Daten) mit Hilfe von elektromagnetischen Wellen über eine Funkschnittstelle zwischen einer Basisstation und einer Teilnehmerstation - gegebenenfalls einer Mobilstation - übertragen. Das Abstrahlen der elektromagnetischen Wellen erfolgt dabei mit Trägerfrequenzen, die in dem für das jeweilige System vorgesehenen Frequenzband liegen. Beim GSM (Global System für Mobile Communication) - einem Systems der zweiten Generation - liegen die Trägerfrequenzen im Bereich von 900, 1800 bzw. 1900 MHz. Für zukünftige Mobilfunksysteme mit insbesondere TD/CDMA-Übertragungsverfahren bzw. FD/CDMA-Übertragungsverfahren über die Funkschnittstelle, wie beispielsweise das UMTS (Universal Mobile Telecommunication System) oder andere Systeme der dritten Generation, sind Frequenzen im Frequenzband von ca. 2000 MHz vorgesehen.

Moderne Funkkommunikationssysteme sollen neben vielen anderen Diensten auch den Aufbau einer Notrufübertragung (Emergency Call) ermöglichen. Ein solcher Notruf wird in der Regel von einer Teilnehmerstation, insbesondere auch von einer mobilen Teilnehmerstation, initiiert. Naturgemäß sollen Notrufe als solche identifiziert und schnellstmöglichst vom Netzwerk verarbeitet werden.

In Funkkommunikationsverbindungen der zweiten und/oder dritten Generation können Informationen kanalvermittelt (CS Circuit Switched) oder paketvermittelt (PS Packet Switched) übertragen werden.

Das UTRAN (UMTS Terrestrial Radio Access Network) besteht aus einer Anzahl von Funkteilsystemen (RNS Radio Network Subsystem), die jeweils über die Iᵤ-Schnittstelle mit dem Kernnetz (CN Core Network) verbunden sind. Im Hinblick auf die kanalvermittelten Übertragungen und auf die paketvermittelten Übertragungen ist die Iᵤ-Schnittstelle zwischen Kernnetz und UTRAN logisch in die Iᵤ-CS undoin die I_{U}-PS gegliedert.

Beim System GERAN (GSM EDGE Radio Access Network, wobei EDGE für Enhanced Data Rates For GSM Evolution steht) ist zwischen dem Festnetz des GSM-Netzes das Basisstationsteilsystem (BSS Base Station Subsystem), wozu die Komponenten Basisstation (BTS Base Transceiver Station) und Basisstationssteuerung (BSC Base Station Controller) gehören, über die A-Schnittstelle mit Mobilvermittlungsstellen (MSC Mobile Services Switching Center) verbunden.

Es sind Situationen denkbar, in denen Funkkommunikationssysteme der erwähnten Art einen von der Teilnehmerstation initiieren Notruf nicht bedienen können. Derartige Fälle können beispielsweise auftreten, wenn eine vorübergehende Unterbrechung der Iᵤ-CS- oder A-Schnittstelle besteht. Dies bedeutet, dass zeitweise keine Verbindung zur kanalvermittelten Domäne (CSD Circuit Switched Domain) besteht, was aber erforderlich ist, da dort die Notrufe bearbeitet werden.

Neben einer vorübergehenden Unterbrechung der genannten Verbindungen kann auch eine permanente Unterbrechung bestehen.

In diesen Fällen ist der Funknetzzugangsknoten (RAN Radio Access Network Node) - sei es im System UMTS (RNC Radio Network Controller) oder sei es im System GSM (BSC Base Station Controller) - informiert über die Unterbrechung der Schnittstelle.

Es gibt aber eine Reihe von Fällen, in denen die Funkressourcenkontroll-Funktionen (RRC Radio Ressource Control) im Funknetzzugangsknoten nichts bemerkt von der Existenz eines initiieren Notrufs, weil dies durch die NAS-Signalisierung (NAS Non Access Stratum) bearbeitet wird. Daher kann die Funkressourcenkontrolle keine geeignete Maßnahmen ergreifen, um die Teilnehmerstation darüber zu unterrichten, dass eine Initiierung des Notrufs nutzlos ist in einer Funkzelle, in der die NAS-Signalisierungsverbindung zur kanalvermittelten Domäne (CSD) nicht aufgebaut werden kann. Als Folge stellt sich eine signifikante Verzögerung für den Notruf ein oder dieser wird sogar unmöglich gemacht.

Die Funkressourcenkontroll-Funktion (RRC Radio Ressource Control) ist gemäß dem ISO/OSI-Schichtenmodell, welches für eine weitgehende Standardisierung von Kommunikationssystemen geschaffen wurde, eine Schicht3-Funktion. Diese Vermittlungsschicht ist (Network Layer) ist für die Einrichtung, den Betrieb und die Auslösung von Netzverbindungen zwischen offenen Systemen verantwortlich. Dazu gehören insbesondere das Routing und Interpretieren von Adressen, die optimale Wegewahl beim Verbindungsaufbau bzw. während der Verbindung.

Wenn sich die Teilnehmerstation im System UMTS oder GERAN im Zustand ohne Vorliegen einer Kommunikationsverbindung befindet (Idle Mode), kann in der Regel eine Notrufverbindung über das Einrichten einer RRC-Funktions-Verbindung aufgebaut werden.

Allerdings besteht diese Möglichkeit nicht, wenn die oben erwähnte vorübergehende oder permanente Unterbrechung beispielsweise der Iᵤ-Schnittstellenverbindung besteht. In diesem Fall kann RRC-Information betreffend einige Frequenzen an die Teilnehmerstation übermittelt werden.

Wenn die Teilnehmerstation sich im System UMTS oder GERAN im Zustand einer Kommunikationsverbindung befindet (Connected Mode), besteht keine Möglichkeit auf Seite der Funkressourcenkontrolle, den Notrufwunsch zu erkennen, da in den Funkzellen-Update-Nachrichten, welche Informationsübertragungen in Aufwärtsrichtung (UP Uplink) in den Stati CELL_PCH und URA_PCH initiieren, ein Notruffall nicht berücksichtigt ist. Außerdem ist keine Indikation eines Notrufs in der Direktverbindungsaufbau-Nachricht (Initial Direct Tranfer Message) gegeben, welche zum Aufbau einer Signalisierungsverbindung zur kanalvermittelten Domäne (CSD Circuit Switched Domain) dient.

Eine Funkzellenwiederauswahl (Cell Reselection) wird im Funkkommunikationssystem nur aufgrund von Funkkriterien durchgeführt, so dass die Teilnehmerstation nicht auf eine andere Funkzelle für den Notruf zurückgreifen kann.

Im Falle einer bestehenden RRC-Verbindung besteht keine Möglichkeit in den verbindungsfreien Modus (Idle Mode) zu wechseln.

Insbesondere in Fällen einer paketvermittelte Übertragung ist der Aufbau einer Notrufverbindung auf eine Notrufinitierung hin nicht gesichert oder sogar unmöglich.

Insgesamt zeigt sich, dass die schnelle und sichere Aufbau einer Notrufverbindung keinesfalls gewährleistet ist.

Der Erfindung liegt daher die Aufgabe zugrunde, ein Verfahren und ein Funkkommunikationssystem der eingangs genannten Art aufzuzeigen, welche die beschriebenen Nachteile vermeiden und die Situation des Notrufverbindungsaufbaus verbessern. Insbesondere sollte ein netzwerkseitiges Erkennen eines Notrufwunsches sichergestellt werden. Außerdem sollte auch in den oben beschriebenen Fällen ein Reagieren auf einen Notrufwunsch hin ermöglicht werden.

Diese Aufgabe wird erfindungsgemäß für das Verfahren durch den im Anspruch 1 beschriebenen Gegenstand gelöst.

Vorteilhafte Ausgestaltungen und Weiterbildungen sind Gegenstand der Unteransprüche.

Erfindungsgemäß wird ein Notruf mit Hilfe von Signalisierungsinformation von der Teilnehmerstation initiiert, welche mit der Information übertragen wird, die zum Verbindungsaufbau einer kanalvermittelten Verbindung zwischen der Teilnehmerstation und der Basisstation dient.

Diese Signalisierungsinformation sollte immer bei einer Notrufinitiierung übertragen werden und zwar unabhängig davon, ob die Teilnehmerstation eine kanalvermittelte Verbindung hält oder eine paketvermittelte Übertragung erfolgt oder ob keine Verbindung (Idle Mode) besteht.

Insbesondere wird die Signalisierungsinformation logisch der Funkressourcenkontroll-Funktion zugeordnet, so dass netzwerkseitig sichergestellt werden kann, dass die Funkressourcenkontrolle den Wunsch zum Aufbau einer Notrufverbindung erkennt und entsprechend reagieren kann.

Ein großer Vorteil der Erfindung liegt darin begründet, das nicht nur die gestellte Aufgabe gelöst wird, sondern auch das dies geschieht und gleichzeitig die systemarchitektonischen Prinzipien nicht verletzt werden. Dies wäre etwa der Fall, wenn NAS-Information im Funkressourcenkontroller gelesen würde. Eine Indikation eines Notrufs in der Direktverbindungsaufbau-Nachricht (RRC Initial Direct Tranfer Message) würde eine Verletzung der systemarchitektonischen Prinzipien bedeuten.

In Ausgestaltung der Erfindung wird eine Antwortnachricht von der mindestens einen einer Funkzelle zugeordneten Basisstation an die Teilnehmerstation übermittelt, anhand welcher die Basisstation informiert wird, dass die mindestens eine Funknetzsteuereinrichtung Kenntnis davon hat, dass die Teilnehmerstation eine Notrufverbindung anfordert.

In Weiterbildung der Erfindung kann anhand der Antwortnachricht von der mindestens einen Basisstation an die Teilnehmerstation die Teilnehmerstation informiert werden, wenn der Teilnehmerstation zumindest aktuell in der Funkzelle keine Funkressourcen für die Notrufverbindung zugeteilt sind und/oder werden. Diese Antwortnachricht könnte dann beispielsweise als _{"}RRC Initial Direct Transfer Reject Message" bezeichnet werden. Vorteilhafterweise wird die Antwortnachricht unverzüglich nach Erhalt der den gewünschten Notruf betreffenden Signalisierungsinformation an die Teilnehmerstation übermittelt.

Mit Vorteil kann die Antwortnachricht Informationen über mindestens eine zweite Zelle des Funkkommunikationssystems umfassen, in welcher der Teilnehmerstation Funkressourcen zur Übertragung des Notrufs zur Verfügung stehen. Diese Maßnahme kann zur Schnelligkeit des Aufbaus der Notrufverbindung beitragen.

Insbesondere kann die Antwortnachricht Informationen über Zellparameter der zweiten Zelle oder weiterer Zellen des Funkkommunikationssystems umfassen. Diese Informationen können beinhalten Frequenzinformationen, Funkzellenidentifikationsinformationen (Cell ID), Funkkanalinformationen und/oder irgendwelche anderen Funkzellinformationen.

Die Teilnehmerstation kann auf die Antwortnachricht hin in einen Grundzustand ohne Vorliegen einer Kommunikationsverbindung (Idle Mode) wechseln. Die teilnehmerstation kann beispielsweise auf die Antwortnachricht hin eine Freigabe aller Signalisierungsverbindungen indizieren, so dass, nachdem alle RRC-Verbindungen feigegeben wurden, die Teilnehmerstation in den verbindungsfreien Grundzustand (Idle Mode) gelangt. Es besteht dann die Möglichkeit, dass die Teilnehmerstation erneut Signalisierungsinformation zum Verbindungsaufbau einer kanalvermittelten Verbindung zwischen der Teilnehmerstation und einer Basisstation sendet.

Als Reaktion auf die Antwortnachricht hin kann ein Funkzellenwechsel der Teilnehmerstation erfolgen. So kann kann beispielsweise eine Funkzellenwiederauswahl (Cell Reselection) der Teilnehmerstation vorgesehen sein (z.B. im CELL_PCH, URA_PCH, CELL_FACH) und anschließend versucht die Teilnehmerstation erneut, einen Notruf zu initiieren.

Die Teilnahmerstation (z.B. im Status CELL_DCH) kann die Antwortnachricht auch als Handover-Nachricht werten. In diesem fall kann die Antwortnachricht auch mehr Informationen über die benutzten Kanäle enthalten, so dass existirenden paketvermittelte Dienste sogar weiterhin aufrechterhalten werden können.

Das die Erfindung betreffende Funkkommunikationssystem mit zellularem Aufbau umfasst mindestens eine Teilnehmerstation und mindestens eine Basisstation, welche über einen Funknetzzugangsknoten an mindestens eine Funknetzsteuereinrichtung eines Funkkommunikationsnetzes angebunden ist. Erfindungsgemäß sind Mittel zum Initiieren eines Notrufs von der Teilnehmerstation aus mit Hilfe von Signalisierungsinformation vorhanden, welche mit der Information übertragen wird, die zum Verbindungsaufbau einer kanalvermittelten Verbindung zwischen der Teilnehmerstation und der Basisstation dient.

Das erfindungsgemäße Funkkommunikationssystem kann zur Durchführung des erfindungsgemäßen Verfahrens eingesetzt werden.

In Ausgestaltung der Erfindung sind im Funkkommunikationssystem Mittel zum Übermitteln einer Antwortnachricht, anhand der die Basisstation informiert wird, dass die mindestens eine Funknetzsteuereinrichtung Kenntnis davon hat, dass die mindestens eine Teilnehmerstation einen Notruf abzusetzen will, von der mindestens einen einer Funkzelle zugeordneten Basisstation an die Teilnehmerstation vorgesehen.

## Patentansprüche

1. Verfahren zum Aufbau einer Notrufverbindung in einem zellularen Funkkommunikationssystem mit mindestens einer Teilnehmerstation und mindestens einer Basisstation, welche über einen Funknetzzugangsknoten an mindestens eine Funknetzsteuereinrichtung eines Funkkommunikationsnetzes angebunden ist,
**dadurch gekennzeichnet,**
**dass** ein Notruf mit Hilfe von Signalisierungsinformation von der Teilnehmerstation initiiert wird, welche mit der Information übertragen wird, die zum Verbindungsaufbau einer kanalvermittelten Verbindung zwischen der Teilnehmerstation und der Basisstation dient.

2. Verfahren nach Anspruch 1, **dadurch gekennzeichnet, dass** die Signalisierungsinformation logisch der Funkressourcenkontroll-Funktion zugeordnet wird.

3. Verfahren nach Anspruch 1 oder 2, **dadurch gekennzeichnet, dass** eine Antwortnachricht von der mindestens einen einer Funkzelle zugeordneten Basisstation an die Teilnehmerstation übermittelt wird, anhand der die Basisstation informiert wird, dass die mindestens eine Funknetzsteuereinrichtung Kenntnis davon hat, dass die Teilnehmerstation eine Notrufverbindung anfordert.

4. Verfahren nach Anspruch 3, **dadurch gekennzeichnet, dass** anhand der Antwortnachricht von der mindestens einen Basisstation an die Teilnehmerstation die Teilnehmerstation informiert wird, wenn der Teilnehmerstation zumindest aktuell in der Funkzelle keine Funkressourcen für die Notrufverbindung zugeteilt sind und/oder werden.

5. Verfahren nach Anspruch 3 oder 4, **dadurch gekennzeichnet, dass** die Antwortnachricht Informationen über mindestens eine zweite Zelle des Funkkommunikationssystems umfassen, in welcher der Teilnehmerstation Funkressourcen zur Übertragung des Notrufs zur Verfügung stehen.

6. Verfahren nach Anspruch 5, **dadurch gekennzeichnet, dass** die Antwortnachricht Informationen über Zellparameter der zweiten Zelle des Funkkommunikationssystems umfasst.

7. Verfahren nach einem Ansprüche 3 bis 6, **dadurch gekennzeichnet, dass** die Teilnehmerstation auf die Antwortnachricht hin in einen Grundzustand ohne Vorliegen einer Kommunikationsverbindung wechselt.

8. Verfahren nach einem Ansprüche 3 bis 7, **dadurch gekennzeichnet, dass** auf die Antwortnachricht hin ein Funkzellenwechsel der Teilnehmerstation erfolgt.

9. Verfahren nach Anspruch 7 oder 8, **dadurch gekennzeichnet, dass** die Teilnehmerstation erneut Signalisierungsinformation zum Verbindungsaufbau einer kanalvermittelten Verbindung zwischen der Teilnehmerstation und zumindest einer Basisstation sendet.

10. Funkkommunikationssystem mit zellularem Aufbau umfassend mindestens eine Teilnehmerstation und mindestens eine Basisstation, welche über einen Funknetzzugangsknoten an mindestens eine Funknetzsteuereinrichtung eines Funkkommunikationsnetzes angebunden ist,
**dadurch gekennzeichnet,**
**dass** Mittel zum Initiieren eines Notrufs von der Teilnehmerstation aus mit Hilfe von Signalisierungsinformation, welche mit der Information übertragen wird, die zum Verbindungsaufbau einer kanalvermittelten Verbindung zwischen der Teilnehmerstation und der Basisstation dient, vorhanden sind.

11. Funkkommunikationssystem nach Anspruch 10, **dadurch gekennzeichnet, dass** Mittel zum Übermitteln einer Antwortnachricht, anhand der die Basisstation informiert wird, dass die mindestens eine Funknetzsteuereinrichtung Kenntnis davon hat, dass die Teilnehmerstation eine Notrufverbindung anfordert, von der mindestens einen einer Funkzelle zugeordneten Basisstation an die Teilnehmerstation vorgesehen sind.
